(19) **Europäisches Patentamt**
**European Patent Office**
**Office européen des brevets**

(11) **EP 2 463 001 A2**

(12) # EUROPEAN PATENT APPLICATION

(43) Date of publication:
**13.06.2012 Bulletin 2012/24**

(51) Int Cl.:
***A63F 13/12*** *(2006.01)*

(21) Application number: **12001279.4**

(22) Date of filing: **08.03.2005**

(84) Designated Contracting States:
**AT BE BG CH CY CZ DE DK EE ES FI FR GB GR HU IE IS IT LI LT LU MC NL PL PT RO SE SI SK TR**

(30) Priority: **23.12.2004 US 638637 P**

(62) Document number(s) of the earlier application(s) in accordance with Art. 76 EPC:
**05725127.4 / 1 841 512**

(71) Applicant: **Massive Incorporated**
**New York NY 10012 (US)**

(72) Inventor: **Sturman, David, J.**
**New York**
**NY 10012 (US)**

(74) Representative: **Grünecker, Kinkeldey,**
**Stockmair & Schwanhäusser**
**Leopoldstrasse 4**
**80802 München (DE)**

Remarks:
This application was filed on 27.02.2012 as a divisional application to the application mentioned under INID code 62.

(54) **Matching and scoring of advertisements for targeted delivery into multiple video games, such as single and multiplayer games**

(57) An advertisement delivery scheme and associated facility provide targeted advertisements for multiple video games without advertisers having to specify specific game titles in which they would like their advertisements placed. The targeted advertisements may be provided via a network connection while the video game applications are executed on gaming devices, or via other means. Advertisements may be targeted to groupings of one or more games, and or groupings of one or more players. The advertisements may be matched and scored to appear in specific available ad units within each game. The advertisement delivery scheme and associated facility may be implemented with respect to both single and multiplayer games.

*FIG. 1*

**Description**

CROSS-REFERENCE TO RELATED APPLICATIONS

This application claims the benefit of U.S. Provisional Patent Application No. 60/638,637, filed December 23, 2004, which is herein incorporated in its entirety by reference.

BACKGROUND

Advertising in video games is becoming increasingly popular with both advertisers (who wish to target specific markets through the use of particular game titles) and game developers (who view advertising as a huge revenue opportunity to counterbalance the increasing development costs that result from the demands of today's market). For example, game players are typically more engaged than watchers of television and consumers of other media, resulting in a greater likelihood that advertisements in video games will be observed. In addition, the amount of time people spend playing video games is increasing, while the amount of time people spend watching television and using other traditional media (e.g., print, radio, etc.) is decreasing.

Various techniques have been described to display advertisements in video games. For example, video game developers/publishers may place advertisement-related images within the scenery of their games (e.g., billboards, stadium signs, etc.). In many cases, these advertisements are built in to the game code (e.g., hard coded) and displayed consistently (e.g., at the same place/time) in the game. Based on this hard coding, they can not be changed. In other cases, the advertisements may be provided to the game through a network connection so that the advertisements can be provided for display in the game after the game code has been developed, thus allowing for more dynamic advertisement content.

While such advertising opportunities potentially offer an amazing landscape for advertisers to work with, current techniques for providing advertisers with opportunities for advertising in games are quite limited and are often difficult to implement, and do not meet the needs of advertisers (especially large advertisers) in the way they buy and use mediums for advertising. For example, advertisers who desire to advertise in video games have typically been limited to advertisement opportunities in individual games by working directly with a video game publisher. This approach its subject to many constraints for advertisers including: limited reach- as there is no way to aggregate the audience across game titles to deliver large audiences or "quick reach" over a short time frame - e.g., during a single night, or week; inflexible timing -- as there is no ability to start and stop campaigns with precision which has kept categories and ad budgets out of video games as an advertising medium, e.g., movies (spend up to $1.5 billion to reach 18-34 million annually); and a lack of measurement and control - video games are a "hit"-driven business. Therefore, advertisers have been constrained by a lack of certainty around audience reach and timing and have had no way to measure campaign effectiveness, imposing a reliance on the market performance of the individual video game, which may not sell according to publisher forecasts and which also is typically prone to delay. In a reverse scenario, advertisers are often blocked out of opportunities to advertise in a run-away hit.

Likewise, for game publishers/developers, implementing an effective advertisement campaign typically involves extensively working with advertisers to profile game players, select appropriate game titles for target advertising, manage advertisement delivery, report back to advertisers, etc. In addition, current techniques (e.g., hard-coding and network delivered advertisements) are typically inflexible and force yet another demand on game developers' schedules. Also, developing an advertisement sales department is costly for game developers/publishers and typically depends on extensive management.

BRIEF DESCRIPTIONS OF THE DRAWINGS

Figure 1 is an example of a suitable environment in which the advertisement delivery scheme and associated facility can be implemented.

Figure 2 is an example of a general computing environment in which aspects of the advertisement delivery scheme and associated facility can be implemented.

Figure 3 is a block diagram showing various components associated with selecting advertisements for presentation in the suitable environment of Figure 1.

Figure 4 is a display diagram showing the organization of available ad units/inventory elements within a particular game title.

Figure 5 is a flow diagram showing an example of a matching routine for matching advertisements to available ad units/inventory elements.

Figure 6 is a flow diagram showing an example of a relative scoring/optimization routine for selecting matched advertisements for presentation in available ad units/inventory elements.

Figure 7 is a flow diagram showing an example of establishing a multiplayer game session where consistency of advertisements is desired.

Figure 8 is a flow diagram showing an example of establishing a multiplayer game session where player-specific advertising is desired.

Note: the headings provided herein are for convenience and do not necessarily affect the scope or interpretation of the invention.

A portion of this disclosure contains material to which a claim for copyright is made. The copyright owner has no objection to the facsimile reproduction by anyone of the patent document or patent disclosure (including the Figures) as it appears in the Patent and Trademark Office patent file or records, but the copyright owner reserves all other copyright rights whatsoever.

DETAILED DESCRIPTION

The invention will now be described with respect to various embodiments. The following description provides specific details for a thorough understanding of, and enabling description for, these embodiments of the invention. However, one skilled in the art will understand that the invention may be practiced without these details. In other instances, well-known structures and functions have not been shown or described in detail to avoid unnecessarily obscuring the description of the embodiments of the invention.

The terminology used in the description presented below is intended to be interpreted in its broadest reasonable manner, even though it is being used in conjunction with a detailed description of certain specific embodiments of the invention. Certain terms may even be emphasized below; however, any terminology intended to be interpreted in any restricted manner will be overtly and specifically defined as such in this Detailed Description section.

I. Overview

In the past, advertisers who wished to advertise in video games were limited to selecting specific individual game titles for presenting their advertisements. An advertisement delivery scheme and associated computerized facility allow advertisers to deliver their campaign messages to specific audiences they wish to target across one or multiple game titles played across multiple platforms (e.g., PC, console, mobile, etc.) without being limited to delivering their campaign to only a single specific game title. In some embodiments, the advertisement delivery scheme aggregates an audience across multiple video games and platforms (PC, console, mobile, etc.) and can deliver advertisements to that audience by advertiser request. Consequently, advertisers are able to go to one place to substantially simultaneously reach a narrowly targeted audience, a widely targeted audience, or both across numerous game titles and can broadcast advertising to this audience based on ad campaign needs (e.g., reach 1 million men ages 18-34 at 8 p.m. on Thursdays).

In accordance with some embodiments, the advertisement delivery scheme and associated facility present advertisements as texture maps or other graphical displays (e.g., animations, video, etc.) on pre-designated geometry within the game, such as billboards, storefront signs, panel trucks, Jumbotron screens in a sports stadium, posters on walls, T-shirts on a game character, items used by game characters (e.g., a brand name soft drink or energy bar) and so on. Each of these spaces may be termed an "available ad unit" or "inventory element." Available ad units may also be available at the beginning of a game, at the end of a game, in between levels (e.g., as commercial-like intermissions), as parts of menus, on a "pause" screen, etc. Available ad units may include audio characteristics as well as visual characteristics. Other characteristics for available ad units are also possible (e.g., scented elements, image projections into three-dimensional space, actual structures within the game (e.g., a car), etc.).

When a game is shipped, it may have a fixed set of available ad units grouped into zones (typically delineated by game levels or areas of play). However, other available ad unit configurations may be possible. Some available ad units may be interactive within the game context (e.g., a game character eating a brand name energy bar to boost her power in the game, a brand-related "mini game" presented between levels, a click-through advertisement, etc.) and may bering aspects of the real world into the game (e.g., a player can enter a code from a product to provide advantages in the game).

An example of a representative environment that may be used to implement the advertisement delivery scheme and associated facility may include an advertisement server with various components and services, including client library functions that provide an easy way to link game code (including previously developed game code) with the advertisement server. The advertisement server may also include one or more database components that contain data regarding game inventories, media files, impression statistics, reporting, etc. More specifically, the advertisement server may be responsible for matching advertisements to available ad units/inventory elements for games that are currently being played (or about to be played) on gaming devices that are in communication with the advertisement server.

When a game is played at a player's gaming device (e.g., computer, mobile phone, game console, etc.) that is connected to an advertisement server (e.g., via the Internet or another connection), the client library functions associated with the game application may operate to receive instructions from the advertisement server about which advertisements to present. For example, the advertisement server may determine which advertisements to present based on campaign requirements set in the advertiser's insertion order. The client library functions may then request media data from a media server and pass the media data on to the game code, so that specific advertisements may be presented in the appropriate available ad units at the appropriate time during game play. Communication between the advertisement server and the gaming device may be done sporadically, periodically, or by maintaining a constant connection between the appropriate components while the game is being played.

In some embodiments, components of the advertisement server may be used to track and manage large sets of available ad units from multiple game titles, forming a network of available advertisement spaces. Based on information associated with each of the available ad units (e.g., current game environment, game title genre, predicted player demographic information for current available ad unit, player geography, time of day, game play data, etc.) the advertisement server may then (through matching and optimization) distribute and deliver targeted advertisements to players' gaming devices, where the advertisements may be integrated into the relevant game areas in real time. For example, the multiple games that comprise the network of available advertisement spaces can be divided by genre such as sports titles (and even further by specific sport), children's titles, racing titles, etc. Accordingly, advertisers can target the delivery of their advertisement campaign specifically to a sub-channel as that sub-channel relates to their campaign or may subtarget by time of day (e.g., deliver advertising to all gaming devices playing at 8 p.m. on Thursday) or by game play date (e.g., once the game has been played for 45 minutes -- air the Domino's ad campaign, or in the fourth inning of the sports title, air the XYC campaign). This targeting may include the game devices of game players involved in multiplayer games (who may all see the same advertisement simultaneously).

Both advertisers and game developers/game publishers can benefit from various aspects of the advertisement delivery scheme and associated facility. For example, from the advertisers' perspective, for the first time, advertisers may reach a gaming audience in aggregate - enabling them to reach large audience or "quick reach" over a short time frame. For example, through the advertisement delivery scheme, advertisers can reach millions of game players in a single night. In the past, this was not possible and an advertiser would be limited to the number of players it could reach in a short time frame. Advertisers can also take advantage of the dynamic nature of the advertisement delivery scheme to run time-based advertisement campaigns based on seasons, specific days (e.g., only on Sundays), specific dates (e.g., the day before Valentine's Day), specific times of day (between 6 and 9 p.m.), or events (e.g., scheduled multiplayer game tournaments, movie releases, etc.) not known before the game release. In addition, the dynamic nature of aspects of the advertisement delivery scheme allows a great deal of flexibility for advertisers, who no longer face the risky task of selecting specific game titles in which to display their advertisements. The advertisement delivery scheme may also target the delivery of an advertisement to a specific demographic regardless of the video game members of that demographic are playing. For example, most video games have a relatively low female audience, which discourages advertisers wishing to target females from advertising in video games. The advertisement delivery scheme enables this audience to be aggregated and targeted as a specific audience and creates a viable critical mass of viewers for advertisers, thus opening up previously untapped minority demographics. In general, the advertisement delivery scheme enables an advertiser to deliver advertising across a range of electronic mediums including consoles (such as Sony PlayStation and Microsoft Xbox), PC and Macintosh computers, wireless equipment (cellular phones and other wireless gaming devices), and ultimately electronic billboards and televisions.

From the game developer's/game publisher's perspective, game developers/game publishers no longer need to be extensively involved with implementing and managing advertisements in their games. In addition, because advertisers are no longer focused on selecting advertisement placement using game titles, even developers of smaller or lesser known games (that may otherwise be denied advertising dollars) are provided with the opportunity to include advertisements in their games as well. In addition, the advertisement delivery scheme may insure reach commitments made to advertisers can be more easily satisfied and verified. Further more, due to the viable critical mass of viewers and the ability to "quick" reach across large audiences, the advertisement delivery scheme unlocks significantly larger advertising budgets than larger advertising budgets. Of course, many other benefits to both advertisers and game developers exist.

The advertisement delivery scheme and associated facility may also include components and services that track and audit the quality of presentation of the in-game advertisements. For example, components and services of the advertisement delivery scheme and associated facility may track, audit, and report on advertisement impressions (which quantify the presentation qualities - e.g., viewing angle, percent screen size, and time on screen, brightness - of an advertisement as presented in any given instance). This collected information (and other information collected by the advertisement server) may then be used in billing to ensure that advertisers pay only for advertisement presentations that meet specified thresholds. The collected information may also be provided and/or sold to advertisers (and possibly developers and other parties) to guide future planning decisions.

In addition to advertisements, other types of information may be delivered to games using the advertisement server, thereby enhancing the experience of the game player. For example, it may be possible to provide real time content in a game, such as NFL scores, weather information, holiday decorations in cityscapes, etc.

II. Representative Environments

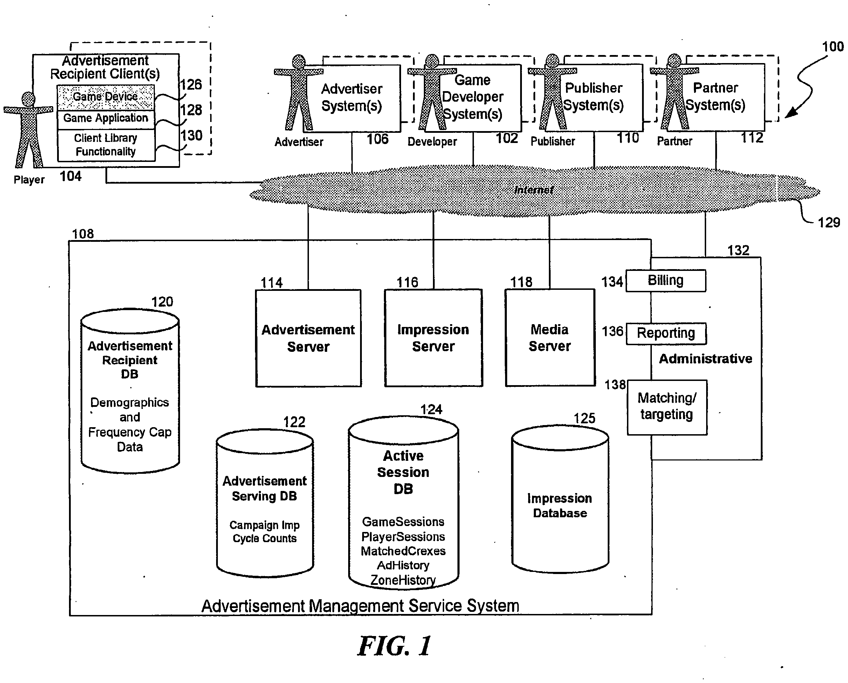

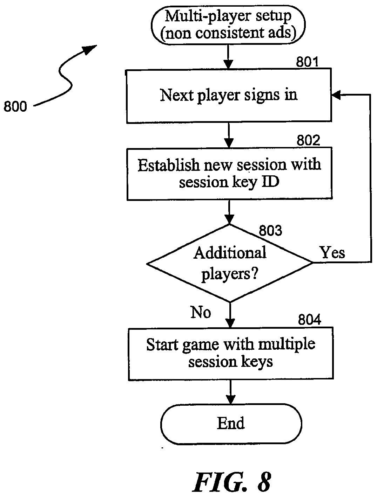

Referring to Figure 1, a suitable environment 100 in which aspects of the invention may operate include several interconnected systems including at least one game developer system 102, at least one advertisement recipient client 104 (e.g., game player system), at least one advertiser system 106, at least one advertisement management service system 108, and at least one game publisher system 110 that publishes a game title and holds final approval in the content of the game. In general, advertisers, game publishers, and game developers may work with the advertisement management service to manage the dissemination of advertisements. For example, the publisher system 110 may link with various interfaces of the advertisement management service system 108 that allow the publisher to approve or reject insertion orders and to view associated reports (described in more detail with respect to Figure 8). Other systems may also be included, such as at least one partner system 112 that provides real time content (e.g., weather reports, sports scores, news headlines, etc.) or other information that may be delivered real-time into games.

The advertisement management service system 108 may include various components and services that facilitate the management and dissemination of advertisements into games. In some embodiments, the advertisement management service system 108 includes an advertisement server 114, an impression server 116, and a media server 118 (which manages the storage and service of specific media files containing advertisement display/audio information -- e.g., image files, audio files, video files, and executables - to the advertisement recipient client 104 upon request). In addition to the various servers, the advertisement management service system 108 may include various databases, including an advertisement recipient database 120, an advertisement serving database 122, an active session database 124, and an impression database 125. The advertisement management service system may also include an administrative component 132, with interfaces and access to billing 134, reporting 136, matching and targeting administrative access 138, and general system maintenance.

In some embodiments, the advertisement server 114 may fulfill requests received from the advertisement recipient client 104 for advertisements and associated media, including supporting advertisement requests from the advertisement recipient client 104. This may include handling initial connections, providing requested lists of advertisements for specific available ad units, serving media, etc.

In general, the advertisement server 114 may select advertisements based upon a variety of factors, including location, time of day, game player demographics, game play data, etc. The advertisement server 114 may use information retrieved from the advertisement serving database 122, such as "flight" information that describes the time frame in which any particular advertisement or advertisement campaign is set to be presented in games played during that time frame. For example, an advertisement campaign may include one or more advertisements, along with related targeting or presentation parameters specified for flight during a specified date range. Advertisement campaigns may be grouped for logical structure and aggregate reporting. The advertisement server 114 may also retrieve records from the advertisement recipient database 120 (e.g., demographic and login information for specific players) to select appropriate advertisements to serve to current available ad units that the game player will see in the video game. Game player demographic information may be extracted from the advertisement recipient database 120 upon starting a gaming session. Game play data may also be relayed to the advertisement server 114 and may be used to determine ad delivery (e.g. a Domino's campaign that runs once gamers have played a single game session for over 45 minutes - research has shown that this leads to more pizza purchases). This process facilitates selection of the advertisements that the game player will see. In some embodiments, the publisher system 110 may request specific demographic information from the advertisement recipient database 120, including information specific to their game products/titles.

In some embodiments, the impression server 116 of the advertisement management service system 108 may record impression information related auditing information and other reporting data (e.g., ads or text viewed but not counted as an impression) and gaming data (e.g., average game session in minutes, number of live game sessions by day-part, geography, etc.). The impression server 116 may then write this information to the impression database 125. The impression server 116 may also update information about impression counts for specific flights within the advertisement serving database 122.

The advertisement recipient client 104 may include a game playing device 126 (e.g., a console, computer, portable game device, etc.) on which a game application 128 executes. The game playing device 126 may request and receive advertisements from the advertisement management service system 108 and may be configured to establish communication via a communication link, such as the Internet 129. To facilitate communication with the advertisement management service system 108, the game application 128 may include integrated functionality associated with a client library 130 that handles connections and data exchange with the publisher system 110. In some embodiments, the client library functionality 130 is initially incorporated into the game application 128 via exchanges of information between the game developer system 102 and the advertisement management service system 108. During this process, the game developer system 102 may specify memory management and file access parameters for use by the client library functionality 130. Accordingly, in terms of memory and processing resources, the functionality associated with the client library 130 may maintain a low profile in the game playing device 126.

For "offline play" the advertisement recipient client 104 is not constantly communicating with the advertisement management service system 108. In such a scenario, the advertisement recipient client 104 connects to the advertisement management service system 108, starts a session, requests and retrieves flights and media, and caches this information locally. As the game is played the advertisement recipient client 104 may record and cache view and impression information. Later, when the advertisement recipient client 104 reconnects to the advertisement management service system 108, it contacts the impression server 116, flushes all cached view and impression data, and then ends the session.

In some embodiments, the game developer system 102 and advertisement management service system 108 may communicate to incorporate at least a portion of the client library functionality 130 into a game title, which may include having the developer specify the availability of available ad units within specific game titles.

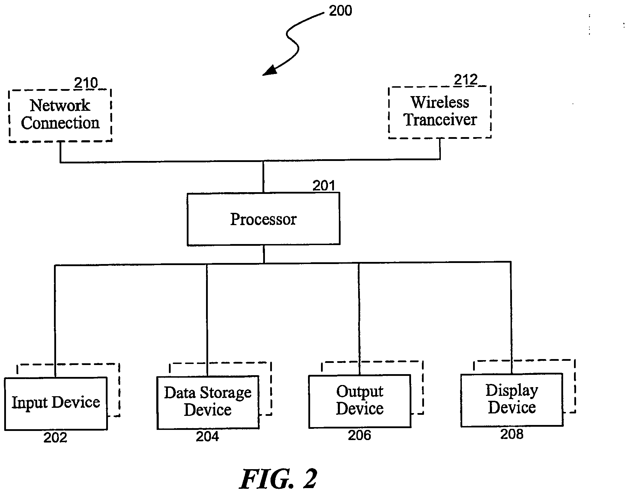

Aspects of the invention employ one or more game consoles or computing devices. Figure 2 and the following discussion provide a brief, general description of a suitable game console or computing environment in which aspects of the invention can be implemented. Although not required, aspects and embodiments of the invention will be described in the general context of computer-executable instructions, such as routines executed by a general-purpose computer, e.g., a server, game console or personal computer. Those skilled in the relevant art will appreciate that the invention can be practiced with other system configurations, including Internet appliances, hand-held devices, wearable computers, cellular or mobile phones, multiprocessor systems, microprocessor-based or programmable consumer electronics, set-top boxes, network PCs, mini-computers, mainframe computers and the like. The invention can be embodied in a special purpose computer or data processor that is specifically programmed, configured, or constructed to perform one or more of the computer-executable instructions explained in detail below. Indeed, the term "computer," "game console," "console" or the like, as used generally herein, refers to any of the above devices, as well as any data processor.

The invention can also be practiced in distributed environments, where tasks or modules are performed by remote processing devices, which are linked through a communications network, such as a Local Area Network ("LAN"), Wide Area Network ("WAN"), or the Internet. In a distributed environment, program or game modules or sub-routines may be located in both local and remote memory storage devices. Aspects of the invention described below may be stored or distributed on computer-readable media, including magnetic and optically readable and removable computer discs, stored as firmware in chips (e.g., EEPROM chips), as well as distributed electronically over the Internet or over other networks (including wireless networks). Those skilled in the relevant art will recognize that portions of the invention may reside on a server computer, while corresponding portions reside on a client computer. Data structures and transmission of data particular to aspects of the invention are also encompassed within the scope of the invention.

Referring to Figure 2, one embodiment of the invention employs a console or computer 200 having one or more processors 201 coupled to one or more user input devices 202 and data storage devices 204. The console 200 is also coupled to at least one output device such as a display device 208 (e.g., a TV) and one or more optional additional output devices 206 (e.g., speakers, tactile or olfactory output devices, and printers). The console 200 may be coupled to external consoles or computers, such as via an optional network connection 210, a wireless transceiver 212, or both.

The input devices 202 may include a game pad, a keyboard, and/or a pointing device such as a mouse. Other input devices are possible, such as a bar code reader/scanner, magnetic card swipe reader, check reader, fingerprint reader, microphone, joystick, pen, scanner, digital camera, video camera, and the like.

The data storage devices 204 may include any type of computer-readable media that can store data accessible by the console 200, such as cartridges with semiconductor memory, magnetic hard and floppy disk drives, optical disk drives, magnetic cassettes, tape drives, flash memory cards, digital video disks (DVDs), Bernoulli cartridges, RAMs, ROMs, smart cards, etc. Indeed, any medium for storing or transmitting computer-readable instructions and data may be employed, including a connection port to or node on a network such as a Local Area Network ("LAN"), Wide Area Network ("WAN"), or the Internet (not shown in Figure 2).

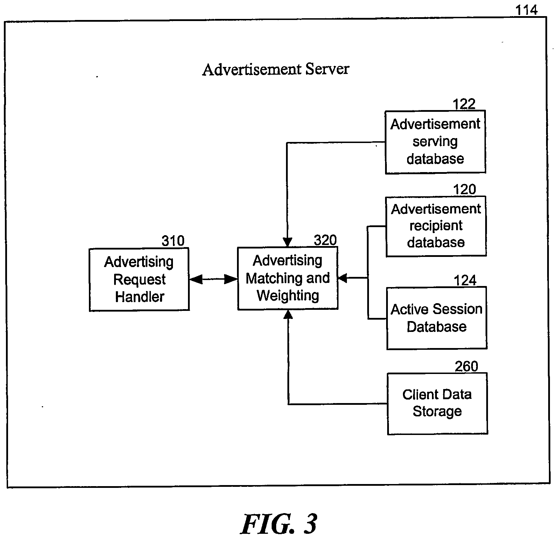

Referring to Figure 3, various flows of data may occur in association with the advertisement server 114 delivering advertising to one or more advertising recipient systems, such as the advertisement recipient client 104 of Figure 1. For example, the advertising recipient client 104 (not shown in Figure 3) may communicate with an advertising request handler 310 associated with the advertisement server 114. This may enable the matching of advertisement campaigns to various appropriate video game titles.

In some embodiments, the advertisement recipient client 104 begins by establishing or joining a session with the advertisement server 114 (Figure 1). Establishing this session may create a record in the active session database 124 (Figure 1), which registers the game player as the first member of the new session and is used to track and record all communications and data sent to and received from the advertisement recipient client 104. In response to establishing this session, the advertisement server 114 may assign the advertisement recipient client 104 a session ID, which the advertisement recipient client 104 may use for all communications with the advertisement server 114 and an impression server, such as the impression server 116 of Figure 1.

If the advertisement recipient client 104 is joining an existing session, the advertisement server 114 may not generate a new record in the active session database 124 (Figure 1). However it may record the joining game player as a member of the session, provided the session exists and is active in the active session database 124. When a game player specifically and actively leaves a session, the advertisement recipient client 104 sends a message indicating the game player left, or when a specified time of inactivity passes between the advertisement recipient client 104 and the advertisement server 114 passing messages, that game player is removed as a member of the game player's current session. When the session has no game players as members that session is ended and marked as inactive in the active session database 124.

In some embodiments, the advertisement recipient client 104 requests advertisements for delivery to one or more available ad units within the client software application. This request contains a data structure that includes a unique identifier to indicate the client type, another unique identifier for the specific game player, the session ID and the list of available ad units for which advertisements are being requested. The client type can effectively be a SKU, which includes a type of game console, game, language, etc. (Alternatively, the data structure may be locally stored data, similar to a cookie.) The advertising request handler 310 forwards this request to an advertising matching and weighting system 320. The advertising matching and weighting system 320 processes the request and produces a set of one or more matched advertisements to be displayed for each available ad unit, specified within the client's request.

In some embodiments, the advertisement serving database 122 contains advertising information that is available to potentially display on all advertisement recipient clients 104 within the framework of the advertising delivery scheme and associated facility. A set of advertising for each request may be extracted from the advertisement serving database 122 based upon data retrieved from the advertisement recipient database 120 keyed upon the unique client identifier. In some embodiments, the tail end of this process (e.g., actually delivering the files and data that the advertisement recipient client 104 uses to display the advertisement) may be handled by a media server that functions as an edge server, such as the media server 118 of Figure 1. In effect, the delivery of the content for advertisements may be separated from the metadata concerning the advertisement.

The advertisement recipient database 120 contains information about the technical media formats accepted by each advertising destination within an advertisement recipient client 104, and which advertising has been specifically approved for each advertisement recipient client 104 by a game publisher/developer. Only advertisements that can provide the correct media format for the requested destination and that have been specifically approved to be displayed within the client may be included in the set of advertising.

The advertisements retrieved from the advertisement serving database 122 by the advertising matching and weighting system 320 are assigned a weight by the advertising matching and weighting system 320. The advertising matching and weighting system 320 may calculate the weight of each advertisement based on several factors including campaign goal and completion data from the advertisement serving database 122 and information regarding the specific client type from the advertisement recipient database 120. The advertising matching and weighting system 320 then selects one or more advertisements from the weighted advertisement set, where the probability of an advertisement being selected is directly derived from the advertisement's assigned weight, relative to other advertisements in the set. The selected advertisements are then sent back to the advertising request handler 310 and transmitted back to the advertisement recipient client 104 for display.

Optionally, advertising can be further targeted based upon specific demographic characteristics of a game player. This targeting is specified within the advertisement serving database 122 and used to compare against data retrieved from a client data storage 160 by the advertising matching and weighting system 320. The client data storage 260 may contains demographic information regarding a specific game player. This information may be collected from various sources, both internal and external to the advertisement management service system 108. For example, it may contain demographic information about a game player collected via the use of an IP address, including information tracked by the advertisement management service system 108 and/or information purchased or traded from other data collection sources (e.g., Internet service providers, data mining companies, online retailers, etc.). Aside from general demographics (e.g., age, sex, geographic location, hardware software platforms, etc.) examples of such data include data about purchasing habits of a game player, information about web sites that the game player visits, information about purchasing habits of the game player, information, etc.

The data in the active session database 124 records the advertisements that have been delivered to a session, and may serve multiple purposes. For example, the advertising matching and weighting system 320 may use this data along with impression data, also stored in the active session database 124, to allow frequency caps (e.g., a limit as to a number of times a particular advertisement is displayed in a game or level/location in the game). Frequency caps may prevent a gamer from being presented with advertisements from the same campaign in excess of a number of times specified within the campaign data. The active session database 124 data may also be used to support multiplayer sessions, etc.

In modern software, which supports multiplayer sessions, it is common to attempt to generate a "shared space" as game players can communicate about the space by voice or other form of chat. A "shared space" means that all game players within the session perceive identical environments with identical artistic elements at the same perceived location. To enable this, the advertising matching and weighting system 320 associated with the advertisement server 114 may use the active session database 124 to both record the advertisements delivered to the advertisement recipient client 104 within a session to first request an advertisement for a specific location, and to ensure that all subsequent session-specific advertisement recipient client 104 requests for advertisements for that specific location are fulfilled with the same advertisement, as recorded in the active session database 124.

III. Matching and Relative Scoring Schemes

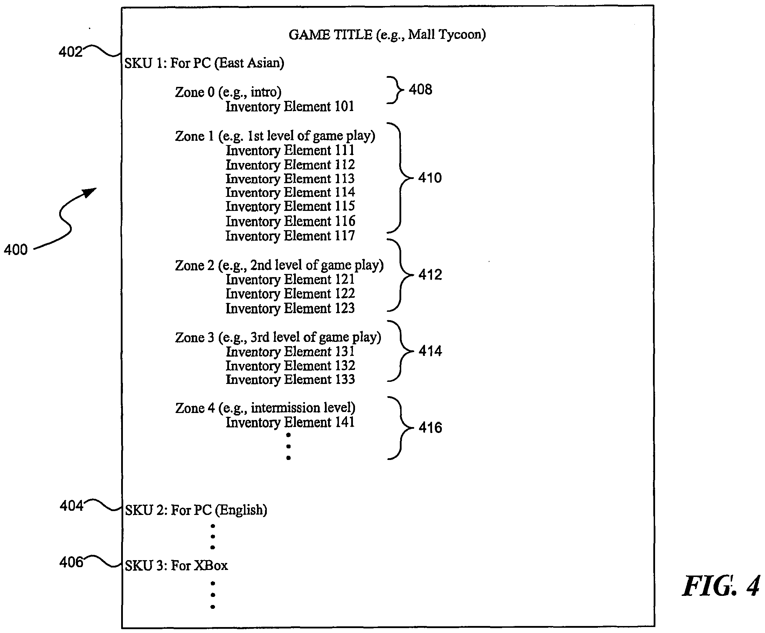

As an introduction to matching and relative scoring, Figure 4 provides an example of the organization of available ad units/inventory elements within a particular game title 400. The game title 400 (e.g., Mall Tycoon) includes three SKUs (402, 404, and 406), with SKU 1 402 shown in more detail. In some embodiments, a SKU represents a specific version of a title, differentiated from other versions of the title by platform, language, geographic distribution, format (e.g., PAL/NTSC), or other features. One title may have multiple SKUs worldwide. In the illustrated example, SKU 1 402 includes at least five zones (408, 410, 412, 414, and 416) with each zone representing a positional or functional area within a game environment (e.g., groupings of particular game content, game levels, in between game levels, game introduction, game ending, etc.). Each zone (408, 410, 412, 414, and 416) then includes its own inventory elements/ available ad units, in which one or more advertisements may be displayed during game play. In the context of this particular example, some matching considerations (e.g., in Boolean form) might be as follows: "SKU 1 or SKU 2," "SKU 1 and Males," "Inventory Element 123 and Males and Tuesday."

For implementation purposes, an inheritance relationship may be present among the various components of a game structures associated with a game title, such as the game title 400 described above. For example, there inventory elements may inherit attributes from zones, zones may inherit attributes from SKUs, and SKUs may inherit attributes from game titles. Each inventory element in the zone may be associated with certain information that allows it to be associated with particular advertisements at some point down the line. This may include information such as the size and shape of the inventory element, the format of the advertisement the inventory element takes, and keywords or other information associated with the inventory element (e.g., suggesting a theme associated with the inventory element as it relates to the game).

In general, a matching process involves taking a set of submitted advertisements/advertisement campaigns that are designated for flight in a given time period and, based on targeting criteria provided by the advertisers and known technical parameters (e.g., whether it is possible to configure the advertisement to fit inside and function properly within a particular available ad unit/inventory element), marching some or all of those advertisements with currently available and units/inventory elements. This may typically involve a binary decision: an advertisement either matches an inventory element or does not. In general, targeting may be publisher/content driven, player demographic driven, advertiser driven, game play behavior driven or environment driven. Examples of targeting criteria used in matching include explicit inventory targeting (e.g., targeting specific titles, SKUs, zones, available ad units/inventory elements, etc.), date range targeting (e.g., from time A to time B), time of day targeting (e.g., afternoons only), day of week targeting (e.g., only Saturdays), targeting by genre (e.g., racing games, sports games, etc.), targeting by platform (e.g., PC users, XBox users, etc.), targeting by ESRB rating, targeting by keyword, frequency caps, by game play date (e.g., once 45 minutes of game session have passed), etc.

Player-specific information may also be used for targeting, and may include player geographic information (e.g., country, region/state, city, and Direct Marketing Associate (DMA) areas), and player demographics (e.g., gender, age, purchase history, etc.), and game play behavior (e.g., play 80% of time on weekends, play sports titles and racing only, play for average of 4 hours per game session, etc.). Player-specific information derived from a player's IP address may be used for targeting, such as geographic information (e.g., postal/zip code, area code, longitude, and latitude), root domain (e.g., .edu vs..com), and specific domains/ISPs (e.g., *.aol.com). Other types of targeting information include targeting by game network (e.g., target the "EA Sports" network), targeting by client version, targeting based on multiplayer participation, targeting by arbitrary user list (e.g., specific player IDs are collected into lists based on demographic or other criteria: "All player IDs known to have played a car driving game might be shown Toyota advertisements in a different game."), OS or hardware versions, etc. It may be possible to obtain player specific information from other sources, such as partner databases. cookies associated with click through advertisements may also be used to track/ collect player specific information. For example, if a player clicks on a click through game advertisement to purchase a pair of jeans, this information may be collected. Many other data collection techniques are possible, some of which may be implemented by tracking the activities that occur in association with a game playing device.

In general, targeting may involve inclusions (e.g., all sports games), exclusions (e.g., no games with "blood" as a keyword) or a combination of both (e.g., in the evenings but not on Tuesdays). Although the advertiser primarily makes the decision about what targeting to use, many types of targeting criteria revolve around how the publisher has classified its inventory. Various specific examples of targeting criteria are discussed in detail in commonly owned PCT Patent Application No. _____(attorney docket no. 573218001WO), filed March 8, 2005, entitled "Delivery of Advertising into Multiple Video Games," which is herein incorporated by reference.

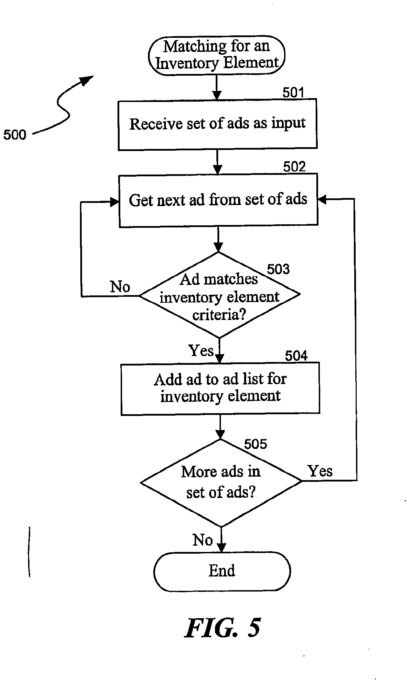

Referring to Figure 5, a matching routine/algorithm 500 may take place in an advertisement server, such as the advertisement server 114 of Figure 1. The matching routine 500 may begin at block 501, where it receives a set of advertisements and/or advertisement campaigns as input to match to an given inventory element/available ad unit. At block 502, the routine may get the next advertisement from the set of advertisements from the set received at block 501. In some embodiments, the matching routine 500 may do a full loop through all advertisements on every inventory element match. Accordingly, at decision block 503, the routine 500 checks whether the advertisement matches criteria associated with the inventory element. Some our all of the above criteria and more may be employed in block 503. If at decision block 503 there is not a match, the routine 500 loops back to block 502 to get the next advertisement from the set of advertisements. If, however, at decision block 503 there is a match, the routine continues at block 504. At block 504, the routine 500 adds the matched advertisement to an advertisement list. At decision block 505, the routine 500 checks whether there are additional advertisements in the set of advertisements. If there are additional advertisements, the routine 500 loops back to block 502 to get the next advertisement from the set of advertisements. However, if at decision block 505 there are no further advertisements in the set of advertisements, the routine ends.

Where minimizing the use of memory at the game server is an issue, it may also be possible to use indexes for matching. The indexes may be prefabricated and use a fundamental targeting property to winnow the list of advertisements to a small set of advertisements. Use of such an index may minimize the use of loops in the matching routine 500. For example, the index might be a map from a SKU ID to a list of currently matching advertisement campaigns. in some embodiments, a batch process may recalculate such an index every hour or so.

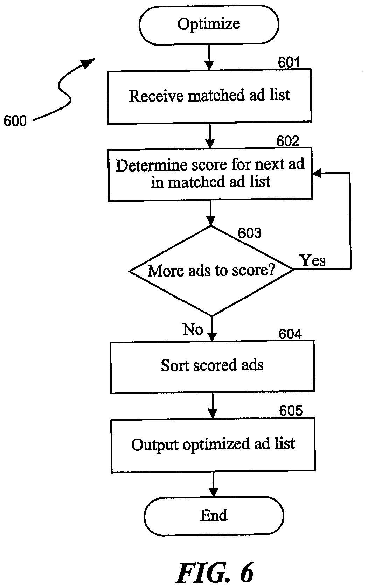

Because the matching process described above may result in more than one advertisement per available ad unit at any given time, a relative scoring scheme may be implemented to select one or more advertisements for display for a particular available ad unit. The relative scoring scheme may be based on several factors, such as prioritization, scheduling, and optimization. Generally, relative scoring may involve calculating a score for each available advertisement. Referring to Figure 6, relative scoring may optionally be performed as a second process performed on the list of matched advertisements (e.g., executing a score function on each advertisement and then sorting the list based on the score).

A routine 600 for relative scoring/optimization is described with respect to Figure 6. The routine 600 begins at block 601, where the routine 600 receives a list of matched advertisements, such as the list resulting from the routine 500 of Figure 5. At block 602, the routine 600 determines a score for the next advertisement in the list of matched advertisements. At decision block 603, the routine 600 checks if there are additional advertisements to score. If at decision block 603 there are additional advertisements to score, the routine 600 loops back to block 602 to determine a score for the next advertisement in the list. If, however, at decision block 603 there are no more advertisements to score, the routine 600 continues at block 604, where the routine 600 sorts the scored advertisements. At block 605, the routine 600 outputs the optimized/scored list of matched advertisements so that the appropriate information can be sent to the advertising recipient system. The routine 600 then ends.

Alternatively, instead of performing the routine 600 on a prematched list of advertisements, relative scoring may be integrated as part of the matching process (e.g., by scoring the advertisements at the same time the matching is performed, and simply keeping the best "1 to N" advertisements as the matching proceeds). With this scheme, optimization may be viewed as an extra layer of complexity on top of the matching process.

Prioritization is one factor in relative scoring, and may be used alone or in combination with other factors to select advertisements when more than one matched advertisement is available to fill a single inventory element/available ad unit at a given time. For example, an explicit prioritization scheme may be implemented that allows advertisement campaigns that pay a premium to take precedence. In some embodiments, explicit prioritization may be based on a scoring scheme, such as the scoring scheme shown in Table A below, where a higher scoring advertisement takes precedence over a lower scoring advertisement.

TABLE A

| Order | Campaign Priority | Score | Description |
|---|---|---|---|
| 1 | Exclusive | 5000 | Must run if matched. This type of campaign does not have an impression goal, although it may have a frequency cap. |
| 2 | Standard | 4000 | The regular campaign. |
| 3 | Bulk | 3000 | Only runs if no Exclusive and Standard campaigns have matched. This implies that we cannot guarantee meeting any impression goals. |
| 4 | PSA | 2000 | Public Service Advertisements |
| 5 | House | 1000 | House Advertisements |

(continued)

| Order | Campaign Priority | Score | Description |
|-------|-------------------|-------|-------------|
| 6 | Default | 0 | Default media built into the game. This is the media the game player sees if they have no Internet connection. However, if they do have a connection, then the client may still report these default impression counts to enable inventory forecasting. |

In addition to the explicit prioritization schemes illustrated above, other prioritization schemes may be possible. For example, an advertiser may be willing to pay a higher rate (e.g., $2500 for 1000 impressions verses $1500 for 1000 impressions) for having its advertisements take priority over others.

An implicit prioritization scheme may also be used, where advertisements with narrower targeting take precedence over those with broader targeting, because the opportunities to run such advertisements may be limited. For example, if Advertisement A targets racing titles on Tuesday and Advertisement B targets all titles on Tuesday, it may be beneficial to run Advertisement A over Advertisement B because it is narrower so that there is a greater chance that both advertisements can be run that day. In a similar scheme, an advertisement with a lower run rate (e.g., has only run once so far) may take precedence over an advertisement with a higher run rate (e.g., has run three times so far). Also, it may be possible for administrative users to adjust prioritization schemes on an as needed basis (e.g., to strengthen or weaken the scores of particular advertisements or advertisement groups to reach desired goals).

Scheduling (e.g., considering run rates and other scheduling factors) may be another factor considered in relative scoring. In some embodiments, scheduling may be based, at least in part, on run rates. Selecting an appropriate run rate may allow an advertiser to have some control of how and whether their advertisements will run under various circumstances. For example, some advertisers may want their advertisements spread out as evenly as possible across a given time period , while others may want their advertisements to be run as fast as possible given a certain start date.

Once a run rate strategy is selected, run rate can then be calculated/tracked using various techniques. For example, run rate may be calculated based on percent of goal achieved divided by the time period that has passed. For example, if an advertisement campaign has achieved 25% of its impression goal after 25% of its time period has passed, then its run rate is equal to 1, which is ideal. On the other hand, if it has achieved 50% of its goal in 75% of its allotted time, then its run rate is 2/3, which is too slow. Anything below 1 means the campaign is behind schedule, anything above 1 means ahead of schedule. The following equation demonstrates:

$$RunRate = \frac{\%goalAchieved}{\%timePassed} = \frac{impressionsCounted/impressionGoal}{(CurrentTime - StartTime)/campaignDuration}$$

If an advertisement campaign is set to run at relatively steady rate, and it is running more than some threshold percentage ahead of schedule, then the advertisement delivery scheme and associated facility may be configured so that the advertisements from the campaign run at a lower priority. In addition, run rates may be adjusted to account for the fact that traffic loads may vary from day to day and hour to hour. For example, if game playing increases on Saturdays and decreases on Mondays, then, in order to make the most use of the available ad units, the maximum run rate threshold may be set higher on Saturdays.

Another factor in relative scoring is optimization, which may also be based on a variety of factors. For example, a scoring matrix may be used to optimize advertisement placement based on information known about whether various inventory and/or player attributes have a positive or negative influence on the advertisement awareness of different types of advertisements. An example of such a matrix is shown in Table B below.

| Scoring Matrix | Advertisement attributes | | |
|---|---|---|---|
| Inventory or Player Attributes | Sports | Clothing | Cars |
| gender=male | +10 | -5 | +5 |
| gender=female | -5 | +10 | 0 |
| age<20 | +5 | 0 | -10 |
| age>55 | 0 | -5 | +5 |

TABLE B

For example, the above matrix could be used to subtly influence the prioritization function illustrated with respect to Table A above. The scoring numbers shown in Table B are relatively small compared with those in Table A, but could nonetheless affect which advertisements are presented at any given time. If several campaigns have the same campaign priority, and the same on-schedule run rate, then the scoring matrix would be the deciding factor. Other than scheduling it may be possible to optimize based on factors such as reach, effectiveness, and brand awareness.

Relative score calculation ultimately implements one or more of the prioritization, scheduling, and optimization factors. Table C illustrates some of the factors that may be included in a score. Many of these factors may be manually configurable, meaning that administrators may be able to alter them relative to each other (e.g., relative strength of priority vs. run rate). In addition, it may be possible to provide a randomization factor.

TABLE C

| Name | Relative Scoring | Range |
|---|---|---|
| Campaign Priority | x 1000 | 0 to 5000 |
| Run rate (behind schedule is higher priority) | x 100 | -100 to +100 |
| Optimization factors (TBD) | TBD | TBD |
| Random Factor | x 75 | 0 to 100 |
| Score Modifier | arbitrary | arbitrary |

As applied to the scoring example in Table C, a matched advertisement instance belonging to a standard campaign (4000 points), with a 50% run rate (+50 points), a random factor of 50 (+50 points), and a score modifier of 50, would have a total score of 4150. This total score can then be compared with the total scores of any other matched advertisements, which may be implemented using a sorting algorithm.

Depending on the nature of the available ad unit for which the scored advertisements are competing, the scoring scheme (or a similar scoring scheme) may result in one or more advertisements being selected for presentation from the total list of matched advertisements. For example, in the case of a static available ad unit, only one advertisement is selected (e.g., the one with the highest score). In the case of a rotating available ad unit, multiple advertisements (e.g., the six highest scoring advertisements) may be selected to rotate through as game play proceeds. With rotating advertisements, a random factor may be introduced resulting in variations in rotation sequence. Where predictability is desirable in place of randomization, an administrator may be able to position rotating images to ensure a predictable order.

VI. Multiplayer Considerations

In some embodiments, the advertising delivery scheme and associated facility provide functionality for multiplayer game sessions. This functionality may include technology to serve the same advertisements to the same locations within a shared peer-to-peer game space so that all the players in the shared space see the same advertising in the same location at the same time (substantially simultaneously).

Matching and optimizing logic may be modified when multiple players are playing in the same multiplayer game session. In some cases, advertisers may want to keep advertisements consistent for each player of the multiplayer game. In other cases, the advertiser may want to modify the advertisements based on the specific demographics of each player of the multiplayer game. For example, if an advertisement targets only the male gender and a female then enters a multiplayer game session, it may be desirable to break session consistency and present a different advertisement to the female. However, in other cases, session consistency may be deemed more important that player-specific targeting, as consistency typically helps maintain the realism and integrity of the game experience.

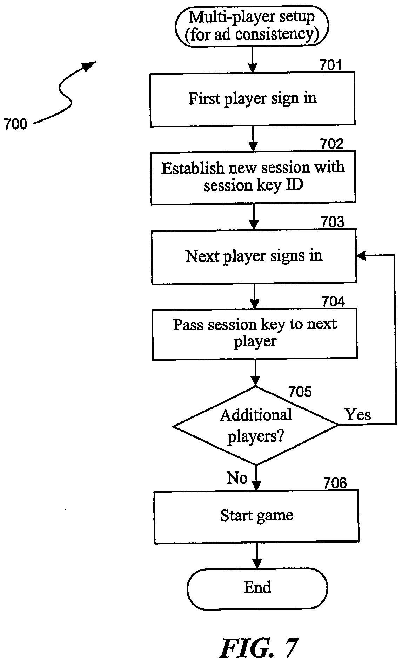

Figures 7 and 8 are flow diagrams showing routines for establishing multiplayer sessions in accordance with some embodiments of the advertising delivery scheme and associated facility. Figure 7 illustrates a routine 700 for establishing a multiplayer session with a shared session key (for consistency of advertisements within a multiplayer game). This routine 700 may be implemented to maintain consistency with advertisements in a multiplayer game from a matching perspective, and the advertisement decisions may be based on targeting directed toward the first player into a zone, the first player to sign in, the majority of players, a rotation of players (e.g., target to player 1 in first level and player 2 in second level), etc. All the other players will be presented with the same set of matches. On the other hand, if player targeting takes precedence over session consistency, each player creates a new session on which advertisement matching is then based.

The routine 700 begins at block 701, where the routine 700 receives information from a first player signing in. At block 702, the routine 700 creates a session at the server and associates it with the first player and a unique session key. For purposes of either single player or multi-player games, as session may start when the gaming device (client) first initiates contact with the game management service system (server), and ends upon request of the gaming device (e.g., when the player turns off the game, or switches to a new game). At block 703, a next player signs in. At block 704, the unique session key is passed to the next player. For example, the gaming device of the first player may send the unique session key to the next player, so that session keys are passed from player to player. At decision block 705, the routine 700 checks for additional players. If at decision block 705 there are additional players, the routine 700 loops back to block 703, where a next player signs in. If, however, at decision block 705 there are no additional players, the routine 700 continues at block 706, where the game begins using a shared session key.

If the desired approach is consistency with advertisements, it may be possible to avoid wasteful advertising in the context of multiplayer games by disallowing advertisement campaigns with certain player-specific targeting from running in titles with the potential to be multiplayer sessions. For example, targeting based on genre, day of week, time of day, etc., may be allowed while targeting based on player-associated attributes, gender, geography, and age might not be allowed for multiplayer titles.

Figure 8 illustrates a routine 800 for establishing a multiplayer session with multiple session keys (to allow for player-specific targeting within a single game). At block 801, the routine 800 receives information for a next player signing in. At block 802, the routine 800 establishes a new session for the player that just signed in. This session key may then be used to identify that particular player during play of the multipurpose game, so that that player can receive advertisements targeted specifically to him or her (as well as the game itself). At decision block 803, the routine 800 checks for additional players. If there are additional players, the routine 800 loops back to block 801 for the next player to sign in. If, however, at decision block 803 there are no additional players, the routine 800 continues at block 804, where the game begins with a unique session for each player in the game.

V. Conclusion

In general, unless the context clearly requires otherwise, throughout the description, the words "comprise," "comprising," and the like are to be construed in an inclusive sense, as opposed to an exclusive or exhaustive sense; that is to say, in the sense of "including, but not limited to." The word "coupled," as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in this Detailed Description using the singular or plural number may also include the plural or singular number respectively. When the word "or" is used in reference to a list of two or more items, that word covers all of the following interpretations of the word: any of the items in the list, all of the items in the list, and any combination of the items in the list.

The above detailed description of embodiments of the invention is not intended to be exhaustive or to limit the invention to the precise form disclosed above. While specific embodiments of, and examples for, the invention are described above for illustrative purposes, various equivalent modifications are possible within the scope of the invention, as those skilled in the relevant art will recognize. For example, while processes or blocks are presented in a given order, alternative embodiments may perform routines having steps, or employ systems having blocks, in a different order, and some processes or blocks may be deleted, moved, added, subdivided, combined, and/or modified. Each of these processes or blocks may be implemented in a variety of different ways. Also, while processes or blocks are at times shown as being performed in series, these processes or blocks may instead be performed in parallel, or may be performed at different times.

Aspects of the invention may be stored or distributed on computer-readable media, including magnetically or optically readable computer discs, hardwired or preprogrammed chips (e.g., EEPROM semiconductor chips), nanotechnology memory, biological memory, or other data storage media. Indeed, computer implemented instructions, data structures, screen displays, and other data under aspects of the invention may be distributed over the Internet or over other networks (including wireless networks), on a propagated signal on a propagation medium (e.g., an electromagnetic wave(s), a sound wave, etc.) over a period of time, or they may be provided on any analog or digital network (packet switched, circuit switched, or other scheme). Those skilled in the relevant art will recognize that portions of the invention reside on a server computer, while corresponding portions reside on a client computer such as a console, PC or portable device, and thus, while certain hardware platforms are described herein, aspects of the invention are equally applicable to nodes on a network.

The teachings of the invention provided herein can be applied to other systems, not necessarily the system described herein. The elements and acts of the various embodiments described above can be combined to provide further embodiments.

Any patents, applications, or other references noted herein, including any that may be listed in accompanying filing papers, are incorporated herein by reference. Aspects of the invention can be modified, if necessary, to employ the systems, functions, and concepts of the various references described above to provide yet further embodiments of the invention.

These and other changes can be made to the invention in light of this Detailed Description. While the above description details certain embodiments of the invention and describes the best mode contemplated, no matter how detailed the above appears in text, the invention can be practiced in many ways. Details may vary considerably in its implementation details, while still being encompassed by the invention disclosed herein. For example, advertisements, or other data such as audio or video, may be streamed to the game console or computer using existing data streaming technology. As noted above, particular terminology used when describing certain features or aspects of the invention should not be taken to imply that the terminology is being redefined herein to be restricted to any specific characteristics, features, or aspects of the invention with which that terminology is associated. In general, the terms used in the following claims should not be construed to limit the invention to the specific embodiments disclosed in the specification, unless the Detailed Description explicitly defines such terms. Accordingly, the actual scope of the invention encompasses not only the disclosed embodiments, but also all equivalent ways of practicing or implementing the invention.

Some of the pages described herein include representative computer displays or web pages. The screens may be implemented in C++ or as web pages under XML (Extensible Markup Language), HTML (HyperText Markup Language) or any other scripts or methods of creating displayable data, such as the Wireless Access Protocol ("WAP"). Indeed much of the system may be implemented in XML, or alternatively in binary form to speed transmission and processing. The screens or web pages provide facilities to receive input data, such as game play. However, screens or web pages may of course also provide a form with fields to be filled in, pull-down menus or entries allowing one or more of several options to be selected, buttons, sliders, hypertext links or other known user interface tools for receiving user input. While certain ways of displaying information to users is shown and described, those skilled in the relevant art will recognize that various other alternatives may be employed. The terms "screen," "web page" and "page" are generally used interchangeably herein.

When implemented as web pages, the screens are stored as display descriptions, graphical user interfaces, or other methods of depicting information on a computer screen (e.g., commands, links, fonts, colors, layout, sizes and relative positions, and the like), where the layout and information or content to be displayed on the page is stored in a database. In general, a "link" refers to any resource locator identifying a resource on a network, such as a display description provided by an organization having a site or node on the network. A "display description," as generally used herein, refers to any method of automatically displaying information on a computer screen in any of the above-noted formats, as well as other formats, such as email or character/code-based formats, algorithm-based formats (e.g., vector generated), or matrix or bit-mapped formats. While aspects of the invention are described herein using a networked environment, some or all features may be implemented within a single-computer environment.

**The following is a list of further preferred embodiments of the invention:**

Embodiment 1: A system for playing computer or video games and displaying advertising to an audience playing the computer or video games, the system comprising:

multiple electronic game platforms, wherein each game platform includes:

a display screen;

an input device;

a network connection;

memory at least temporarily storing game elements under multiple computer or video games, and storing an advertising presentation process; and

a data processor coupled to the display screen, input device, network connection, and memory, wherein the processor is programmed:

to receive from the network connection a session value associated with each game playing session, wherein other players may join an existing game playing session via a similar session value,

to execute elements of the computer or video game as a player plays the computer or video game, wherein the computer or video game includes multiple advertising locations to receive advertisements,

to receive advertisements via the network connection under direction of the advertising presentation process, and

to insert advertisements into the advertising locations under direction of the advertising presentation process; and

a game advertising system for broadcasting multiple advertisements across multiple games to the multiple electronic game platforms, wherein the game advertising system includes:

an advertising database containing the multiple advertisements;

an advertising location database identifying multiple advertising locations within each of the multiple games; and

an advertising server in communication with the advertising database and the advertising location database and, at least at times, in network communication with the multiple electronic game platforms;

wherein the advertising server is programmed:

to match at least some of the multiple advertisements with at least some of the advertising locations based on at least two targeting criteria, wherein the targeting criteria include information associated with a game or game player and information provided by an advertiser,

to score at least some of the multiple advertisements for placement in the advertising locations based on prioritization, scheduling, or optimization factors, and

to provide at least one advertisement to the advertising presentation process of the multiple electronic game platforms via the network connection, wherein any of the multiple electronic game platforms employing a same session value receives a same advertisement.

Embodiment 2: The system of embodiment 1 wherein the targeting criteria include exclusions or inclusions relating to: game content, player preference, advertiser preference, specific game titles, game SKUs, zones of a game, date range, day of week, type of game platform, game rating, keyword, or advertisement frequency cap, and wherein the prioritization, scheduling, or optimization factors include:

advertising campaign preferences, measured delivery rates, providing advertisements as quickly as possible to satisfy a predetermined volume of ad presentation, predetermined volume of ad presentation within the given time period, and employing a scoring matrix that includes information known about whether player attributes have a positive or negative influence on advertisement awareness of different types of advertisements.

Embodiment 3: The system of embodiment 1 wherein the targeting criteria include exclusions or inclusions relating to: player geographic information, player gender, player age, player purchase history, player internet protocol ("IP") address, IP domain, game network, average of criteria from multiplayer participation, majority of at least one of the criteria from multiplayer participation, or type of game.

Embodiment 4: A computer-implemented method for providing advertisements for a computer or video game, the method comprising:

receiving a set of electronic advertisements for placement in advertising locations within the computer or video game;

setting at least two advertisement matching criteria; and

creating an advertisement list based on those electronic advertisements that satisfy the at least two advertisement matching criteria, wherein the electronic advertisements in the advertisement list are for presentation or replay within the computer or video game.

Embodiment 5: The method of embodiment 4 wherein the at least two advertisement matching criteria comprise inclusions or exclusions relating to game player specific information.

Embodiment 6: The method of embodiment 4 wherein the advertisement list is created, at least in part, via the use of one or more indexes that allow mapping between advertisements and identified advertisement settings based on the at least two advertisement matching criteria.

Embodiment 7: The method of embodiment 4 wherein the criteria comprise exclusions or inclusions relating to game content.

Embodiment 8: The method of embodiment 4 wherein the criteria comprise time-related exclusions or inclusions and information regarding a type of advertisement suitable for one of the advertising locations.

Embodiment 9: A system for displaying ads in electronic games, wherein the electronic games are played on computers, game consoles, or both, which are coupled to a network, the system comprising:

an ad server configured to provide advertisement data to the computers or game consoles via the network, wherein the ad server is configured to:

receive a set of electronic advertisements for presentation or replay within electronic games;

provide a score to at least some of the electronic advertisements in the set of advertisements; and

provide an advertisement list based on the at least some of the electronic advertisements having a score, wherein the electronic advertisements in the advertisement list are for presentation or replay within the computer or video game based on the provided score.

Embodiment 10: The system of embodiment 9 wherein the score is based, at least in part, on

$$RunRate = \frac{\%goalAchieved}{\%timePassed} = \frac{impressionsCounted / impressionGoal}{(CurrentTime - StartTime) / campaignDuration}$$

wherein **impressionGoal** relates to a number of impressions desired by an advertisement campaign, wherein **impressionscounted** relates to a number of executed advertisement instances from the advertisement campaign that meet specified thresholds, wherein **CurrentTime** relates to a current time and/or date value, wherein **StartTime** relates to a scheduled start time and/or date for the advertisement, wherein **%goalAchieved** is obtained by dividing **impressionsCounted** by **impressionGoal,** and wherein **%timePassed** is obtained by dividing the difference of **CurrentTime** and **StartTime** by **campaignDuration.**

Embodiment 11: A method for presenting advertisements in electronic games played on gaming devices that are coupled to a network, wherein each of the electronic games provides one or more available ad units during its execution, the method comprising:

identifying a set of currently available ad units;

identifying a set of advertisement campaigns having advertisements set for presentation, wherein the set of advertisement campaigns includes information indicating a set of parameters for matching advertisements with available ad units;

for each of the currently available ad units in the set of currently available ad units, identifying matching advertisements from the set of advertisement campaigns;

determining a relative score for advertisements from the set of advertisement campaigns; and

if more than one matching advertisement is identified, assessing the relative score of each advertisement, so that at least one advertisement can be selected for presentation in the available advertisement unit based on the determined scores.

Embodiment 12: The method of embodiment 11 wherein determining a relative score for advertisements from the set of advertisement campaigns includes analyzing a campaign priority factor, wherein the campaign priority factor is based on a score associated with the type of advertisement campaign that the advertisement is associated, wherein the type of campaign is an exclusive campaign, a standard campaign, a bulk campaign, a public service announcement campaign, a house campaign, or a default campaign.

Embodiment 13: The method of embodiment 11 wherein determining a relative score for each of the advertisements includes analyzing a targeting parameters associated with the advertisement, and wherein an advertisement with narrower targeting parameters receives a higher score than an advertisement with broader targeting parameters.

Embodiment 14: The method of embodiment 11 wherein determining a relative score for each of the advertisements is performed along with identifying matching advertisements.

Embodiment 15: The method of embodiment 11 wherein determining a relative score for each of the advertisements is performed after identifying matching advertisements.

Embodiment 16: The method of embodiment 11 wherein determining a relative score includes assessing an optimization score, and wherein the optimization score is based on one or more of scheduling, campaign reach quantifications, campaign effectiveness quantifications, monetary value per advertisement presentation, or brand awareness quantifications.

Embodiment 17: A system for providing advertisements to a multiplayer video game executed on multiple gaming devices coupled to an advertisement management system via a network, the system comprising:

means for establishing a game session with a first gaming device, wherein the game session is associated with a session key;

means for adding additional gaming devices to the established game session, wherein each of the additional gaming devices receives the session key;

means for delivering substantially similar advertisement content to the first gaming device and each of the additional gaming devices in a group, and for presenting to each gaming device in the group the substantially similar advertisement content within a virtual shared gaming environment while the multiplayer video game is executed on each gaming device in the group.

Embodiment 18: The system of embodiment 17, further comprising:

means for tracking quality of presentation of the substantially similar advertisement content with respect to each gaming devices in the group.

Embodiment 19: The system of embodiment 17 wherein each of the additional gaming devices receives the session key from the first gaming device.

Embodiment 20: The system of embodiment 17 wherein the virtual shared gaming environment is associated with an advertiser sponsored tournament.

Embodiment 21: The system of embodiment 17 wherein the substantially similar advertisement content delivered to each of the gaming devices in the group is selected based on an advertiser defined targeting scheme that targets classifications of games by genre or audience as opposed to specific game titles.

Embodiment 22: The system of embodiment 17 wherein the virtual shared gaming environment is configured so that each gaming device in the group presents, substantially simultaneously, the substantially similar advertisement content.

Embodiment 23: The system of embodiment 17 wherein the virtual shared gaming environment is configured so at least some gaming devices in the group present in the multiplayer game the substantially similar advertisement content in a substantially similar context, but not necessarily simultaneously.

Embodiment 24: The system of embodiment 17 wherein the delivered advertisements are based on targeting a player associated with one of the gaming devices.

Embodiment 25: The system of embodiment 17 wherein the delivered advertisements are based on targeting a majority of players.

Embodiment 26: The system of embodiment 17 wherein the delivered advertisements are based on targeting a first player at a first level and a second player at a second level.

Embodiment 27: A method for providing advertisements to video games executed on gaming devices coupled to an advertisement management system via a network, the system comprising:

establishing a first game session in a multiplayer video game with a first gaming device, wherein the first game session is associated with a first session key;

establishing a second game session in the multiplayer video game with a second gaming device, wherein the second game session is associated with a second session key distinct from the first session key;

establishing a virtual shared gaming environment while the multiplayer video game is executed on the first and second gaming devices; and

providing at least one player-specific advertisement to each player in the virtual shared gaming environment, based on the unique session keys.

Embodiment 28: The method of embodiment 25 wherein the at least one player-specific advertisement is specific to multiplayer games.

**Claims**

1. A game advertising system for broadcasting multiple advertisements across multiple games to multiple electronic game platforms, wherein the game advertising system includes:

   an advertising database containing the multiple advertisements;
   an advertising location database identifying multiple advertising locations within each of the multiple games; and
   an advertising server in communication with the advertising database and the advertising location database and, at least at times, in network communication with the multiple electronic game platforms;
   wherein the advertising server is programmed to:

   match at least some of the multiple advertisements with at least some of the advertising locations based on at least two targeting criteria, and
   provide at least one advertisement to an advertising presentation process of the multiple electronic game platforms via the network connection for presentation or replay at matching advertising locations within respective games.

2. The system of claim 1, wherein the advertisements are presented as texture maps, image projections into three-dimensional space, actual structures within a game, or other graphical displays, such as animations or video, at the matching advertising locations within the one or more games.

3. The system of claim 2, wherein the advertising locations comprise pre-designated geometry within the game, such as billboards, storefront signs, panel trucks, screens in a sports stadium, posters on walls, or items used by game characters.

4. The system of one of claims 1 to 3, wherein the targeting criteria include information associated with a game or game player and information provided by an advertiser, and wherein the advertising server further is programmed to score at least some of the multiple advertisements for placement in the advertising locations based on prioritization, scheduling, or optimization factors.

5. The system of claim 4 wherein the targeting criteria include exclusions or inclusions relating to: game content, player preference, advertiser preference, specific game titles, game SKUs, zones of a game, date range, day of week, type of game platform, game rating, keyword, or advertisement frequency cap, and
wherein the prioritization, scheduling, or optimization factors include: advertising campaign preferences, measured delivery rates, providing advertisements as quickly as possible to satisfy a predetermined volume of ad presentation, predetermined volume of ad presentation within the given time period, and employing a scoring matrix that includes information known about whether player attributes have a positive or negative influence on advertisement awareness of different types of advertisements.

6. The system of one of claims 1 to 3, wherein the targeting criteria include exclusions or inclusions relating to: player geographic information, player gender, player age, player purchase history, player internet protocol ("IP") address, IP domain, game network, average of criteria from multiplayer participation, majority of at least one of the criteria from multiplayer participation, or type of game.

7. A computer-implemented method for presenting advertisements in electronic games played on gaming devices that are coupled to a network, wherein each of the electronic games provides one or more available ad units during its execution, the method comprising:

   identifying a set of currently available ad units;
   identifying a set of advertisement campaigns having advertisements set for presentation, wherein the set of advertisement campaigns includes information indicating a set of parameters for matching advertisements with available ad units;
   for each of the ad units in the set of currently available ad units, identifying matching advertisements from the set of advertisement campaigns, and providing a matching advertisement for presentation or replay in the ad unit within the respective electronic game during its execution.

8. The method of claim 7, for each the ad units in the set of currently available ad units further comprising the step of:

   determining a relative score for advertisements from the set of advertisement campaigns; and
   if more than one matching advertisement is identified, assessing the relative score of each advertisement, so that at least one advertisement can be selected for presentation in the available ad unit based on the determined scores.

9. The method of claim 8 wherein determining a relative score for advertisements from the set of advertisement campaigns includes analyzing a campaign priority factor, wherein the campaign priority factor is based on a score associated with the type of advertisement campaign that the advertisement is associated, wherein the type of campaign is an exclusive campaign, a standard campaign, a bulk campaign, a public service announcement campaign, a house campaign, or a default campaign.

10. The method of claim 8 wherein determining a relative score for each of the advertisements includes analyzing a targeting parameters associated with the advertisement, and wherein an advertisement with narrower targeting parameters receives a higher score than an advertisement with broader targeting parameters.

11. The method of claim 8 wherein determining a relative score for each of the advertisements is performed along with identifying matching advertisements.

**12.** The method of claim 8 wherein determining a relative score for each of the advertisements is performed after identifying matching advertisements.

**13.** The method of claim 8 wherein determining a relative score includes assessing an optimization score, and wherein the optimization score is based on one or more of scheduling, campaign reach quantifications, campaign effectiveness quantifications, monetary value per advertisement presentation, or brand awareness quantifications.

**14.** The method of one of claims 7 to 13, wherein the advertisements are presented as texture maps, image projections into three-dimensional space, actual structures within a game, or other graphical displays, such as animations or video, at the matching ad unit within the respective game during its execution.

**15.** One or more computer-readable media comprising computer-executable instructions which when executed perform the method of one of claims 7 to 14.

FIG. 1

Advertisement Management Service System

**FIG. 2**

EP 2 463 001 A2

EP 2 463 001 A2

114

## Advertisement Server

**122**
Advertisement serving database

**120**
Advertisement recipient database

**310**
Advertising Request Handler

**320**
Advertising Matching and Weighting

**124**
Active Session Database

**260**
Client Data Storage

*FIG. 3*

GAME TITLE (e.g., Mall Tycoon)

402 — SKU 1: For PC (East Asian)

Zone 0 (e.g., intro)                              } 408
        Inventory Element 101

Zone 1 (e.g. 1st level of game play)
        Inventory Element 111
        Inventory Element 112
        Inventory Element 113          } 410
        Inventory Element 114
        Inventory Element 115
        Inventory Element 116
        Inventory Element 117

Zone 2 (e.g., 2nd level of game play)
        Inventory Element 121          } 412
        Inventory Element 122
        Inventory Element 123

Zone 3 (e.g., 3rd level of game play)
        Inventory Element 131          } 414
        Inventory Element 132
        Inventory Element 133

Zone 4 (e.g., intermission level)
        Inventory Element 141          } 416
                •
                •
                •

400

404 — SKU 2: For PC (English)
                •
                •
                •

406 — SKU 3: For XBox
                •
                •
                •

*FIG. 4*

EP 2 463 001 A2

```
         ┌──────────────────────┐
         │   Matching for an    │
         │  Inventory Element   │
         └──────────┬───────────┘
                    │           501
         ┌──────────▼───────────┐
         │ Receive set of ads as input │
         └──────────┬───────────┘
                    │           502
    ┌──►┌──────────▼───────────┐◄──┐
    │   │ Get next ad from set of ads │  │
    │   └──────────┬───────────┘   │
    │              │           503  │
    │          ╱───▼────╲           │
  No│      ╱  Ad matches   ╲        │
    └─────◄ inventory element ►     │
           ╲   criteria?   ╱        │
            ╲───┬────╱             │
              Yes│        504       │
         ┌──────▼───────────┐       │
         │ Add ad to ad list for │  │
         │  inventory element   │   │
         └──────┬───────────┘       │
                │           505      │
            ╱───▼────╲               │
        ╱  More ads in  ╲   Yes      │
       ◄   set of ads?   ►───────────┘
        ╲              ╱
         ╲───┬────╱
          No │
         ┌───▼────┐
         │  End   │
         └────────┘
```

**FIG. 5**

500

501
502
503
504
505

24

EP 2 463 001 A2

```
                    ┌─────────────┐
                    │  Optimize   │
                    └──────┬──────┘
                           │              601
                    ┌──────▼──────────────────┐
                    │  Receive matched ad list │
                    └──────┬──────────────────┘
                           │              602
                    ┌──────▼──────────────────┐
                    │ Determine score for next ad │◄──┐
                    │     in matched ad list      │   │
                    └──────┬──────────────────┘       │
                           │              603          │
                         ◄─┴─►                         │
                       ◄─      ─►    Yes               │
                      ◄ More ads to ►──────────────────┘
                       ◄  score?  ►
                         ◄─┬─►
                        No │              604
                    ┌──────▼──────────┐
                    │  Sort scored ads │
                    └──────┬──────────┘
                           │              605
                    ┌──────▼────────────────┐
                    │  Output optimized ad list │
                    └──────┬────────────────┘
                           │
                    ┌──────▼──────┐
                    │     End     │
                    └─────────────┘
```

600

## FIG. 6

EP 2 463 001 A2

```
                    ┌─────────────────────┐
                    │   Multi-player setup │
                    │  (for ad consistency)│
                    └──────────┬──────────┘
                               │              701
                    ┌──────────▼──────────┐
                    │  First player sign in│
                    └──────────┬──────────┘
                               │              702
                    ┌──────────▼──────────┐
                    │ Establish new session│
                    │   with session key ID│
                    └──────────┬──────────┘
                               │              703
                    ┌──────────▼──────────┐
                    │  Next player signs in│◄────────┐
                    └──────────┬──────────┘         │
                               │              704     │
                    ┌──────────▼──────────┐         │
                    │ Pass session key to  │         │
                    │      next player     │         │
                    └──────────┬──────────┘         │
                               │          705        │
                          ╱────▼────╲                │
                         ╱Additional ╲    Yes        │
                         ╲ players?  ╱───────────────┘
                          ╲─────────╱
                               │
                            No │          706
                    ┌──────────▼──────────┐
                    │     Start game       │
                    └──────────┬──────────┘
                               │
                    ┌──────────▼──────────┐
                    │        End          │
                    └─────────────────────┘
```

700

*FIG. 7*

EP 2 463 001 A2

```
        ┌──────────────────────┐
        │   Multi-player setup  │
        │  (non consistent ads) │
        └──────────────────────┘
                   │
                   ▼              801
        ┌──────────────────────┐
        │   Next player signs in │◄──────┐
        └──────────────────────┘        │
                   │                     │
                   ▼              802    │
        ┌──────────────────────┐        │
        │  Establish new session with │  │
        │      session key ID   │        │
        └──────────────────────┘        │
                   │                     │
                   ▼              803    │
              ╱─────────╲               │
             ╱ Additional ╲   Yes        │
             ╲  players?  ╱──────────────┘
              ╲─────────╱
                   │ No
                   ▼              804
        ┌──────────────────────┐
        │  Start game with multiple │
        │      session keys     │
        └──────────────────────┘
                   │
                   ▼
        ┌──────────────────────┐
        │         End          │
        └──────────────────────┘
```

800

## FIG. 8

**EP 2 463 001 A2**

## REFERENCES CITED IN THE DESCRIPTION

**Patent documents cited in the description**

- US 63863704 P